(19) **Europäisches Patentamt / European Patent Office / Office européen des brevets**

(11) **EP 2 484 162 B1**

(12) **EUROPEAN PATENT SPECIFICATION**

(45) Date of publication and mention of the grant of the patent:
**21.01.2015 Bulletin 2015/04**

(51) Int Cl.:
*H04W 52/36* (2009.01)    *H04W 72/12* (2009.01)
*H04W 52/34* (2009.01)

(21) Application number: **10759642.1**

(22) Date of filing: **29.09.2010**

(86) International application number:
**PCT/EP2010/064405**

(87) International publication number:
**WO 2011/039214 (07.04.2011 Gazette 2011/14)**

(54) **METHODS AND ARRANGEMENTS IN A MOBILE TELECOMMUNICATIONS NETWORK**

VERFAHREN UND ANORDNUNGEN IN EINEM MOBILEN TELEKOMMUNIKATIONSNETZ

PROCÉDÉS ET AGENCEMENTS UTILISÉS DANS UN RÉSEAU DE TÉLÉCOMMUNICATIONS MOBILES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **02.10.2009 US 248092 P**

(43) Date of publication of application:
**08.08.2012 Bulletin 2012/32**

(60) Divisional application:
**14197192.9**

(73) Proprietor: **Telefonaktiebolaget LM Ericsson (publ)**
**164 83 Stockholm (SE)**

(72) Inventors:
• **LARSSON, Daniel**
**S-171 52 Solna (SE)**
• **BALDEMAIR, Robert**
**S-171 70 Solna (SE)**
• **GERSTENBERGER, Dirk**
**S-113 56 Stockholm (SE)**
• **LINDBOM, Lars**
**S-654 62 Karlstad (SE)**

(74) Representative: **Kühn, Friedrich Heinrich**
**Ericsson AB**
**Patent Unit Radio Networks**
**Torshamnsgatan 23**
**S-164 80 Stockholm (SE)**

(56) References cited:
• **LG ELECTRONICS: "Uplink multiple channel transmission under UE transmit power limitation", 3GPP DRAFT; R1-091206 LTEA_UL TXP LIMITATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338821, [retrieved on 2009-03-17]**
• **NOKIA SIEMENS NETWORKS ET AL: "Power headroom reporting for EUTRAN uplink", 3GPP DRAFT; R1-080329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108849, [retrieved on 2008-01-08]**

**Description**

Technical Field

The present invention relates to methods and arrangements in a mobile telecommunication network, and in particular to report transmit power headroom in conjunction with simultaneous transmission of physical uplink shared channels and physical uplink control channels.

Background

3GPP Long Term Evolution (LTE) is a project within the 3rd Generation Partnership Project (3GPP) to improve the UMTS standard with e.g. increased capacity and higher data rates towards the fourth generation of mobile telecommunication networks. Hence, the LTE specifications provide downlink peak rates up to 300 Mbps, an uplink of up to 75 Mbit/s and radio access network round-trip times of less than 10 ms. In addition, LTE supports scalable carrier bandwidths from 20 MHz down to 1.4 MHz and supports both FDD (Frequency Division Duplex) and TDD (Time Division Duplex).

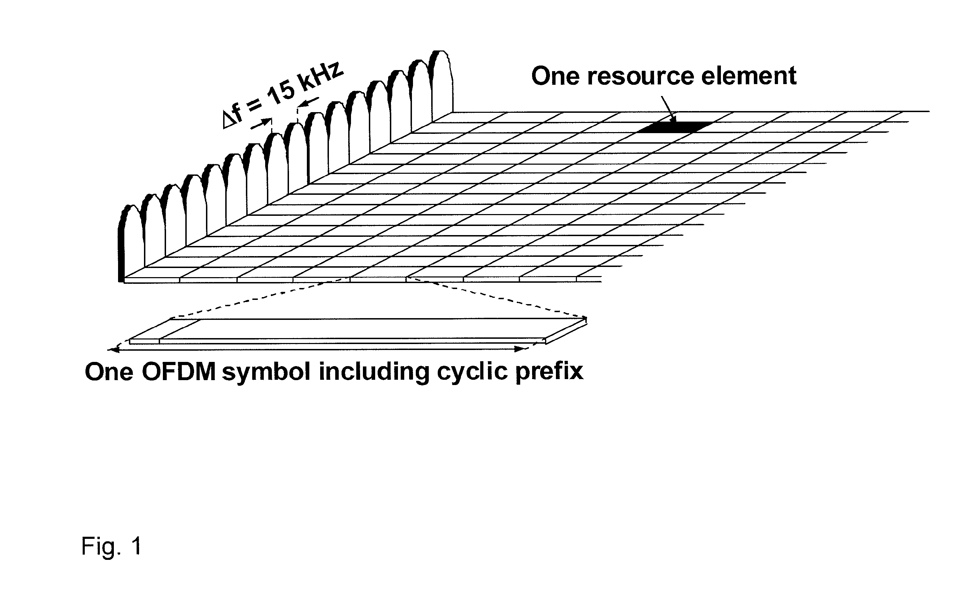

LTE uses OFDM (Orthogonal Frequency Division Multiplex) in the downlink and DFT (Discrete Fourier Transform)-spread OFDM in the uplink. The basic LTE downlink physical resource can thus be seen as a time-frequency grid as illustrated in **figure 1,** where each resource element corresponds to one OFDM subcarrier during one OFDM symbol interval.

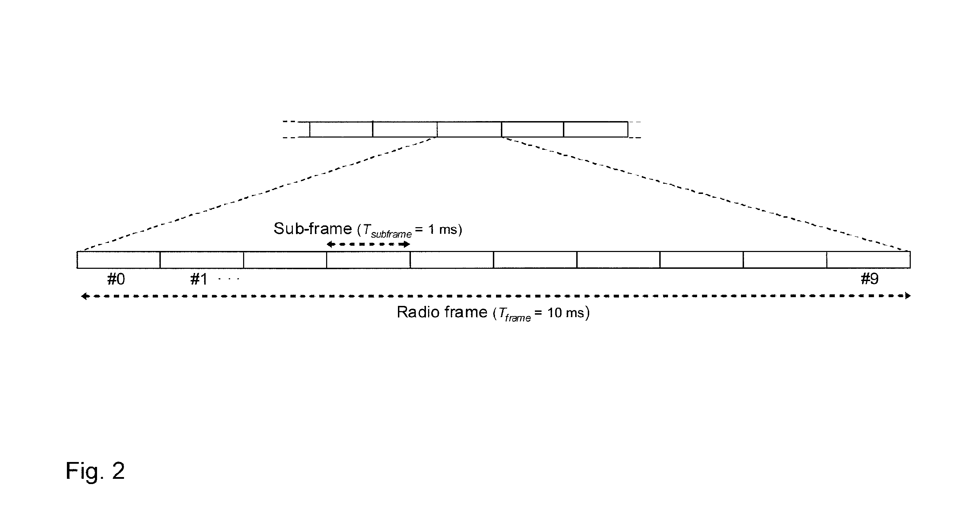

In the time domain, LTE downlink transmissions are organized into radio frames of 10 ms, each radio frame consisting of ten equally-sized subframes of length $T_{subframe}$ = 1 ms as illustrated in **figure 2.**

Furthermore, the resource allocation in LTE is typically described in terms of *resource blocks,* where a resource block corresponds to one slot (0.5 ms) in the time domain and 12 contiguous subcarriers in the frequency domain. Resource blocks are numbered in the frequency domain, starting with 0 from one end of the system bandwidth.

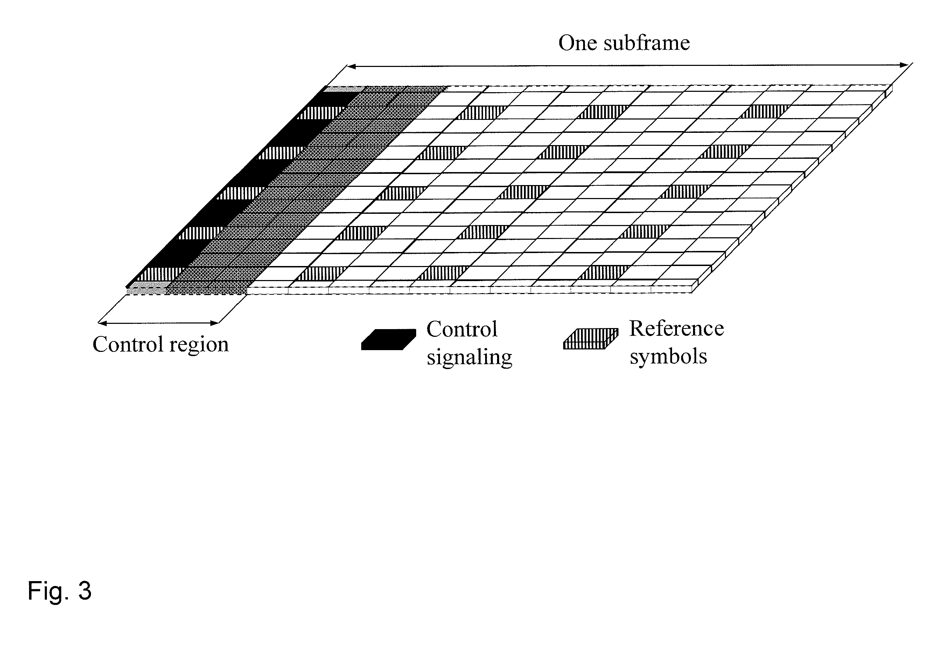

Downlink transmissions are dynamically scheduled, i.e., in each subframe the base station transmits control information about to which terminals data is transmitted and upon which resource blocks the data is transmitted, in the current downlink subframe. This control signaling is typically transmitted in the first 1, 2, 3 or 4 OFDM symbols in each subframe. A downlink system with 3 OFDM symbols as control is illustrated in **figure 3.**

LTE uses hybrid-ARQ, where, after receiving downlink data in a subframe, the terminal attempts to decode it and reports to the base station whether the decoding was successful (ACK) or not (NAK). In case of an unsuccessful decoding attempt, the base station can retransmit the erroneous data.

Uplink control signaling from the terminal to the base station consists of hybrid-ARQ acknowledgements for received downlink data; terminal reports related to the downlink channel conditions, used as assistance for the downlink scheduling; scheduling requests, indicating that a mobile terminal needs uplink resources for uplink data transmissions.

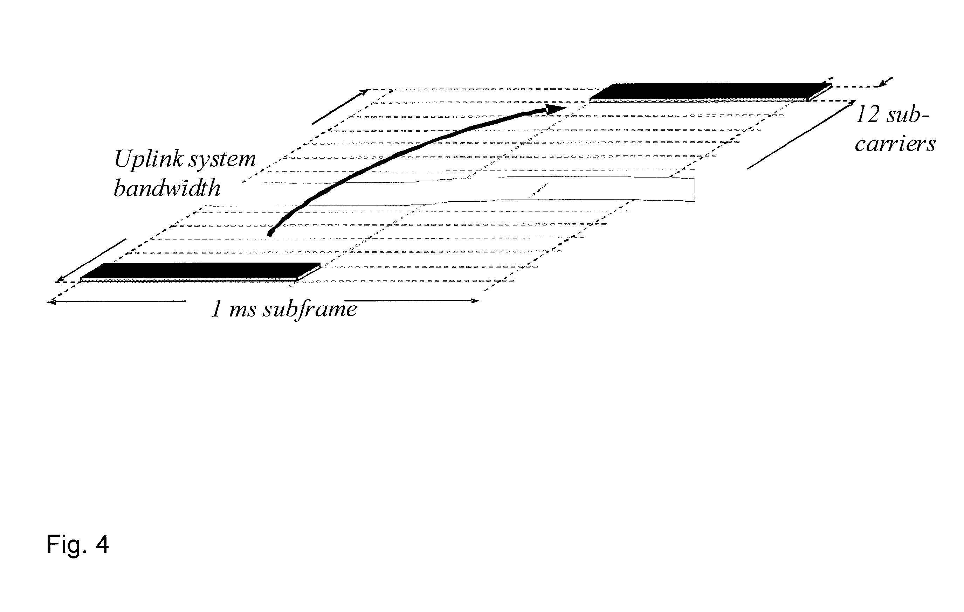

If the mobile terminal has not been assigned an uplink resource for data transmission, the L1/L2 control information (channel-status reports, hybrid-ARQ acknowledgments, and scheduling requests) is transmitted in uplink resources (resource blocks) specifically assigned for uplink L1/L2 control on *Physical Uplink Control Channel* (PUCCH). As illustrated in **figure 4,** these resources are located at the edges of the total available cell bandwidth. Each such resource consists of twelve "subcarriers" (one resource block) within each of the two slots of an uplink subframe. In order to provide frequency diversity, these frequency resources are frequency hopping on the slot boundary, i.e. one "resource" consists of 12 subcarriers at the upper part of the spectrum within the first slot of a subframe and an equally sized resource at the lower part of the spectrum during the second slot of the subframe or vice versa. If more resources are needed for the uplink L1/L2 control signaling, e.g. in case of very large overall transmission bandwidth supporting a large number of users, additional resources blocks can be assigned next to the previously assigned resource blocks.

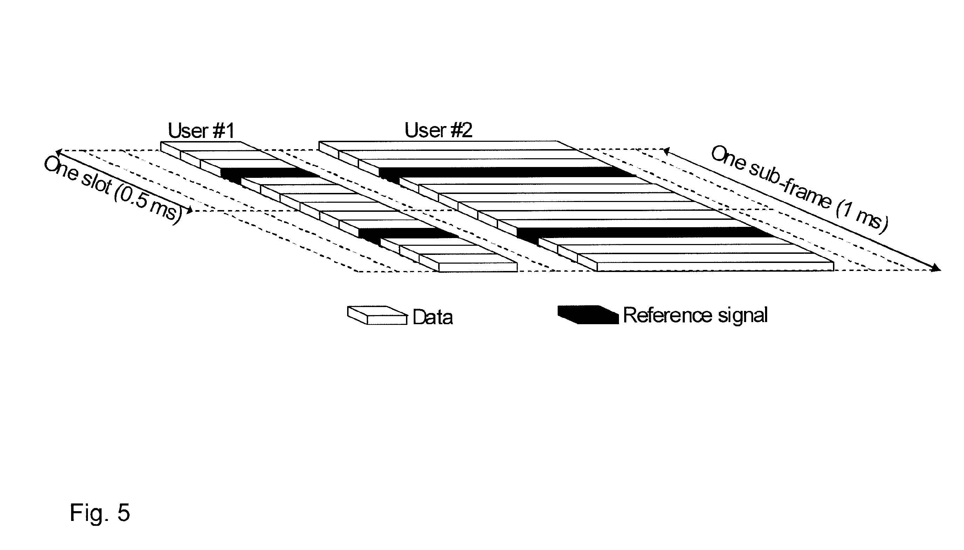

To transmit data in the uplink the mobile terminal has to been assigned an uplink resource for data transmission, on the *Physical Uplink Shared Channel* (PUSCH). In contrast to a data assignment in downlink, in uplink the assignment must always be consecutive in frequency, this to retain the signal carrier property of the uplink as illustrated in **figure 5.**

The middle SC(Single Carrier Frequency Division Multiple Access (FDMA))-symbol (also referred to as DFT-spread OFDM), in each slot is used to transmit a reference symbol. If the mobile terminal has been assigned an uplink resource for data transmission and at the same time instance has control information to transmit, it will transmit the control information together with the data on PUSCH.

Uplink power control is used both on the PUSCH and on PUCCH. The purpose is to ensure that the mobile terminal transmits with sufficient power, but at the same time not be too high, since that would only increase the interference to other users in the network. In both cases, a parameterized open loop combined with a closed loop mechanism is used. Roughly, the open loop part is used to set a point of operation, around which the closed loop component operates. Different parameters such as targets and partial compensation factors for user and control plane are used.

In more detail, for PUSCH the mobile terminal sets the output power according to

$$P_{\text{PUSCH}}(i) = \min\{P_{\text{CMAX}}, 10\log_{10}(M_{\text{PUSCH}}(i)) + P_{\text{O\_PUSCH}}(j) + \alpha \cdot PL + \Delta_{\text{TF}}(i) + f(i)\}$$

[dBm],

where $P_{\text{cMAX}}$ is the configured maximum transmit power for the mobile terminal, $M_{\text{PUSCH}}(i)$ is the number resource blocks assigned, $P_{\text{O\_PUSCH}}(j)$ and a control the target received power, $PL$ is the estimated pathloss, $\Delta_{\text{TF}}(i)$ is transport format compensator and $f(i)$ is the a UE (User Equipment) specific offset or 'closed loop correction'. The function f may represent either absolute or accumulative offsets. The closed loop power control can be operated in two different modes either accumulated or absolute. Both modes are based on a TPC (Transmit power command) which is part of the downlink control signaling. When absolute power control is used, the closed loop correction function is reset every time a new power control command is received. When accumulated power control is used, the power control command is a delta correction with regard to the previously accumulated closed loop correction. The base station can filter the mobile terminals power in both time and frequency to provide an accurate power control operating point for the mobile terminal. The accumulated power control command is defined as $f(i)=f(i-1)+\delta_{PUSCH}(i-K_{PUCH})$, where $\delta_{PUSCH}$ is the TPC command received in $K_{PUSCH}$ subframe before the current subframe $i$ and $f(i-1)$ is the accumulated power control value.

The accumulated power control command is reset when changing cell, entering/leaving RRC active state, an absolute TPC command is received, $P_{\text{O\_PUCCH}}$ is received and when the mobile terminal (re)synchronizes.

In the case of reset the power control command is reset to $f(0)=\Delta P_{rampup}+\delta_{msg2}$, where $\delta_{msg2}$ is the TPC command indicated in the random access response and $\Delta P_{rampup}$ corresponds to the total power ramp-up from the first to the last random access preamble. The PUCCH power control has in principle the same configurable parameters with the exception that PUCCH only has full pathloss compensation, i.e. does only cover the case of $\alpha$ =1.

In existing LTE systems, the base station has the possibility to request a power headroom report from the UE for PUSCH transmissions. R1-080329 discloses defining the power headroom based on PUSCH transmissions. The power headroom reports inform the base station how much transmission power the UE had left for the subframe i. The reported value is within the range of 40 to - 23 dB, where a negative value indicates that the UE did not have enough amount of transmit power to fully conduct the transmission of data, or control information.

The UE PUSCH power headroom $PH$ for subframe $i$ is defined as

$$PH(i) = P_{\text{CMAX}} - \{10\log_{10}(M_{\text{PUSCH}}(i)) + P_{\text{O\_PUSCH}}(j) + \alpha(j) \cdot PL + \Delta_{\text{TF}}(i) + f(i)\}$$

where $P_{\text{CMAX}}$, $M_{\text{PUSCH}}(i)$, $P_{\text{O\_PUSCH}}(j)$, $\alpha(j)$, $PL$, $\Delta_{\text{TF}}(i)$ and $f(i)$ is defined above. In future LTE releases it will be possible to transmit PUCCH and PUSCH at the same occasion and to transmit/receive on multiple component carriers. With the added possibility for the UE to transmit PUSCH and PUCCH at the same occasion, the scenario of power limitation, i.e. when the UE has reached the maximum transmit power, becomes more likely.

The document by LG ELECTRONICS: "Uplink multiple channel transmission under UE transmit power limitation" 3GPP Draft; R1-091206 LTEA_UL TXP LIMITATION, 3RD GENERATION PARTNERSHIP PROJECT (3GPP) MOBILE COMPETENCE CENTRE; 650, ROUTE DES LUCIOLES; F-06921 SOPHIA-ANTIPOLIS CEDEX; FRANCE, no. Seoul, Korea; 20090317, 17 March 2009 (2009-03-17), XP050338821 discloses uplink multiple channel transmission under UE transmit power limitation. the document discuss the case of a UE configured for transmission both over PUSCH and PUCCH simultaneously. A power headroom report is transmitted from the UE to be received by the eNB when in single carrier transmission mod. However, the power headroom report discussed there is based on PUSCH, just as the power headroom report is in LTE rel. 8. It is further stated in the document that the power headroom report is inappropriate when transmitting both over PUSCH and PUCCH simultaneously.

Summary

In order for the base station to schedule PUSCH effectively, the base station needs to be aware of the available transmission power of the UE. In the prior art, the base station requests a power headroom report from the UE, which indicates how much transmission power that is used in the UE based on a PUSCH transmission in subframe i.

Future LTE releases, will give the possibility for the UE to transmit PUSCH (Physical uplink shared channel) and PUCCH (Physical uplink control channel) simultaneously. As both the PUCCH and the PUSCH can be transmitted simultaneously the transmit power in the UE needs to be shared among the two channels. It is therefore desired to be able to achieve an improved solution for predicting the available transmission power. This advantage among others is according to one aspect of the present disclosure solved by the independent claims 1, 5, 9 and 13.

This is achieved by taking account of the PUCCH transmission power in a power headroom report. Hence, the UE is requested to either report an individual power headroom report for PUCCH or a combined power headroom report for PUCCH and PUSCH according to embodiments. For example the combined power headroom report may be transmitted with the individual power headroom report for the PUSCH. The individual power headroom report and the combined power headroom reports may be valid for only one component carrier, e.g. for each individual component carrier, or for the sum of the component carriers.

By using the embodiments of the present invention, the base station is now able to know how much power that the PUCCH will take from the total available transmission power and correspondingly how much power which is left for the scheduled PUSCH transmission.

According to a first aspect of embodiments of the present invention a method in a UE for distributing available transmit power between PUCCH and PUSCH. In the method, available power for transmission on at least the PUCCH is determined, and at least one power headroom report indicating the available power for transmission on at least the PUCCH is transmitted to a base station.

According to a second aspect of embodiments of the present invention a method in a base station for distributing available transmit power of a UE between PUCCH and PUSCH is provided. In the method, at least one power headroom report indicating available power for transmission on at least the PUCCH is received from a UE and the UE is scheduled based on information of the at least one received power headroom report.

According to a third aspect of embodiments of the present invention a UE for distributing available transmit power between PUCCH and PUSCH is provided. The UE comprises a processor configured to determine available power for transmission on at least the PUCCH, and a transmitter configured to transmit to a base station at least one power headroom report indicating the available power for transmission on at least the PUCCH.

A base station for distributing available transmit power of a UE between PUCCH and PUSCH is provided. The base station comprises a receiver configured to receive from the UE at least one power headroom report indicating the available power for transmission on at least the PUCCH, and a processor configured to schedule the UE based on information of the at least one received power headroom report.

An advantage with embodiments of the present invention is that the base station can predict the available remaining transmission power when the PUSCH and PUCCH are simultaneously transmitted.

Brief Description of the drawings

**Figure 1** illustrates the LTE downlink physical resources according to prior art.

**Figure 2** illustrates the LTE time-domain structure according to prior art.

**Figure 3** illustrates the downlink subframes according to prior art.

**Figure 4** illustrates uplink L1/L2 control signaling transmission on PUCCH according to prior art.

**Figure 5** illustrates the PUSCH resource assignment according to prior art.

**Figures 6** and **7** are flowcharts of the methods according to embodiments of the present invention.

**Figure 8** illustrates the UE and the base station according to embodiments of the present invention.

Detailed description

Although the embodiments of the present invention will be described in the context of an LTE network, the embodiments can also be implemented in other networks enabling simultaneous transmission of different physical channels.

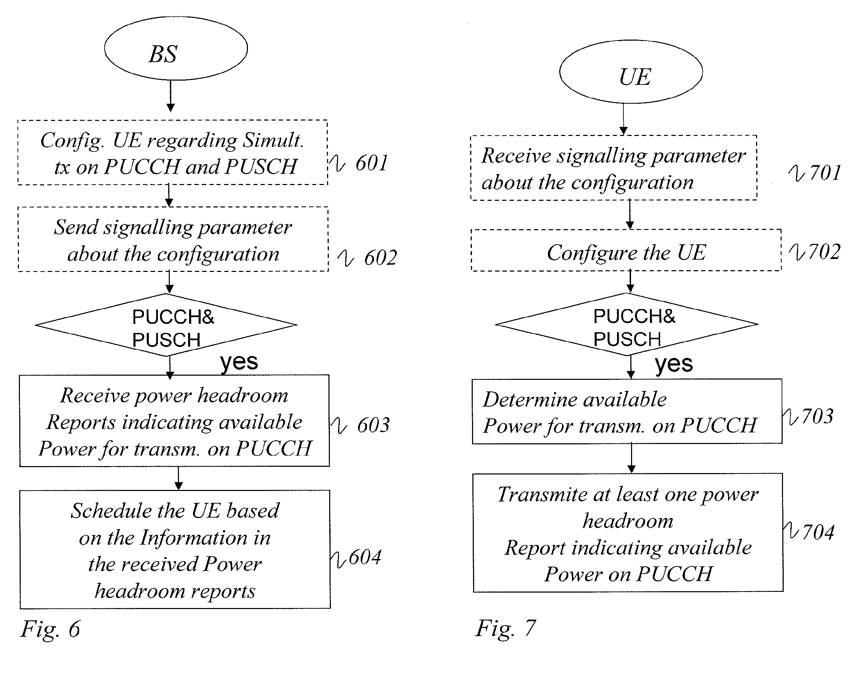

In accordance with embodiments, the base station configures 601 the UE whether or not simultaneous transmission of PUCCH and PUSCH is possible as illustrated in the flowchart of **figure 6.** The base station then signals 602 a parameter to the UE indicating whether simultaneous transmission of PUSCH and PUCCH is possible. The parameter may be signaled via RRC (Radio Resource Control) protocol or as part of the broadcasted system information. Hence, as illustrated in the flowchart of **figure 7,** the UE receives 701 the parameter indicating whether simultaneous transmission of PUSCH and PUCCH is possible, and configures 702 the uplink transmission based on the received parameter according to an embodiment.

As a UE has a limited available transmit power, it would be desired to schedule the UE such that the available transmission power can be taken into account. Hence in situations when simultaneous transmission of PUCCH and PUSCH is possible, it would be desired to be able to take the PUSCH and the PUCCH transmission into account when determining the available UE transmit power.

This is achieved according to embodiments of the present invention by introducing power headroom reports indicating the available power for transmission on at least the PUCCH. This implies that a method in a UE for distributing the available transmit power to avoid violation of UE power limitations on the PUCCH and the PUSCH is provided. The method is illustrated in the flowchart of **figure 7** which shows that the method comprises determining 703 available power for transmission on at least the PUCCH, and transmitting 704 to a base station at least one power headroom report indicating the available power for transmission on at least the PUCCH.

Accordingly, a corresponding method in a base station for distributing available transmit power of a UE between PUCCH, and Physical Uplink Shared Channel, PUSCH is provided. The base station receives 603 from the UE at least one power headroom report indicating the available power for transmission on at least the PUCCH, and schedules 604 the UE based on information of the at least one received power headroom report.

The power headroom reports can be created in different ways according to the embodiments which are further described below.

In a first embodiment the power headroom report indicates the available power for transmission on the PUCCH, i.e. $PH_{PUCCH} = P_{CMAX}$ - PUCCH power where $P_{CMAX}$ is the maximum power for the UE and PUCCH power is the power of PUCCH. It should be noted that the existing power headroom report for PUSCH ($PH_{PUSCH}$) also may be available. An example how the power headroom report for PUCCH ($PH_{PUCCH}$), among many possible implementations, can be determined, is shown below:

$$PH_{PUCCH}(i) = P_{CMAX} - \left\{ P_{0\_PUCCH} + PL + h\left(n_{CQI}, n_{HARQ}\right) + \Delta_{F\_PUCCH}(F) + g(i) \right\}$$

where $P_{CMAX}$ is the configured maximum transmit power for the mobile terminal, $P_{O\_PUSCH}(j)$, $PL$ is the estimated pathloss, $\Delta_{F\_PUCCH}(F)$ is provided by higher layers. Each $\Delta_{F\_PUCCH}(F)$ value is dependent on the PUCCH format. $h(n)$ is also a PUCCH format dependent value, where $n_{CQI}$ corresponds to the number of information bits for the channel quality information and $n_{HARQ}$ is the number of HARQ bits. $g(i)$ is the current PUCCH power adjustment state and $i$ is the current subframe.

In a second alternative embodiment the existing power headroom report for PUSCH is extended to also include PUCCH which is implies that the power headroom is reported for both PUSCH and PUCCH in the same report referred to as $PH_{PUCCH+PUSCH}$, where $PH_{PUCCH+PUSCH}$=Pcmax-(the PUSCH power + the PUCCH power). An example among many possible implementations is shown below:

$$PH_{PUSCH\_and\_PUCCH}(i) = P_{CMAX} - \left\{ P_{0\_PUCCH} + PL + h\left(n_{CQI}, n_{HARQ}\right) + \Delta_{F\_PUCCH}(F) + g(i) \right\} -$$
$$\left\{ 10\log_{10}(M_{PUSCH}(i)) + P_{O\_PUSCH}(j) + \alpha(j) \cdot PL + \Delta_{TF}(i) + f(i) \right\}$$

where the parameter definitions are specified above. It should also be noted that the power headroom can be expressed in dB in the mW or W domain. For the power headroom report indicating the available power for transmission on PUSCH and PUCCH, the power headroom report can be defined as:

$$PH_{PUSCH\_and\_PUCCH}(i) = P_{CMAX,c} - 10\log_{10}\left( 10^{\left(10\log_{10}(M_{PUSCH,c}(i))+P_{O\_PUSCH,c}(j)+\alpha_c(j)\cdot PL+\Delta_{TF,c}(i)+f_c(i)\right)/10} + 10^{\left(P_{0\_PUCCH}+PL+h\left(n_{CQI},n_{HARQ}\right)+\Delta_{F\_PUCCH}(F)+g(i)\right)/10} \right) dB$$

It should be noted that all PH reports can be defined in the mW or W domain and expressed in dB in this way.

According to a third embodiment, the power headroom report for PUSCH and PUCCH can also be used in combination with the existing power headroom report for PUSCH. Thus, the power headroom report indicating the available power for transmission on the PUCCH and the PUSCH is transmitted in combination with a power headroom report indicating the available power for transmission on PUSCH. In this way it is possible to determine the available power on both PUCCH and PUSCH.

According to a fourth embodiment, the power headroom report for PUSCH and PUCCH can also be used in combination with the power headroom report for PUCCH. Thus, the power headroom report indicating the available power for transmission on the PUCCH and the PUSCH is transmitted in combination with a power headroom report indicating the available power for transmission on PUCCH. In this way it is possible to determine the available power on both PUCCH and PUSCH.

According to further embodiments, the power headroom report indicates the available transmission power for a given component carrier c. In the example below the power headroom report indicates the available power for transmission on the PUCCH for a given component carrier c, $PH_{PUCCH}(c)=P_{CMAX}$-PUCCH power(c) in addition to an existing power headroom report for PUSCH, e.g. defined for a specific component carrier. An example among many possible implementations is shown below:

$$PH_{PUCCH}(i,c) = P_{CMAX} - \left\{ P_{0\_PUCCH,c} + PL_c + h(n_{CQI}, n_{HARQ}, c) + \Delta_{F\_PUCCH}(F,c) + g(i,c) \right\}$$

where the parameters follow the definitions specified above.

In a further example, the power headroom report indicating the available power for transmission on the PUCCH and the PUSCH can be defined for a given component carrier. I.e. $PH_{PUCCH+PUSCH}$ (c)=Pcmax-(PUSCH power(c)+PUCCH power(c)) can be exemplified as:

$$PH_{PUSCH\_and\_PUCCH}(i,c) = P_{CMAX} - \left\{ P_{0\_PUCCH,c} + PL_c + h(n_{CQI}, n_{HARQ}, c) + \Delta_{F\_PUCCH}(F,c) + g(i,c) \right\} - \left\{ 10\log_{10}(M_{PUSCH}(i,c)) + P_{0\_PUSCH}(j,c) + \alpha(j) \cdot PL_c + \Delta_{TF}(i,c) + f(i,c) \right\}$$

where the parameters follow the definitions specified above.

In a yet further example, the power headroom report indicating the available power for transmission on the PUCCH and the PUSCH can transmitted in combination with a power headroom report indicating the available power for transmission on PUSCH. These power headroom reports can be defined for a given component carrier c. The transmission of the different reports may occur simultaneously or at separate instances.

In a yet further example, the power headroom report indicating the available power for transmission on the PUCCH and the PUSCH can transmitted in combination with a power headroom report indicating the available power for transmission on PUCCH. These power headroom reports can be defined for a given component carrier c. The transmission of the different reports may occur simultaneously or at separate instances.

The power headroom report on a given component carrier may be triggered by a pathloss change on the same or on another component carrier. The UE may send a power headroom report for a carrier where the pathloss is changed beyond a certain threshold. Alternatively, a pathloss change on one component carrier may trigger a full power headroom report including reports for all component carriers.

The power headroom reports indicating the available power for transmission on PUCCH, PUSCH and on PUCCH and PUSCH can be defined as a sum for all component carriers used by one UE.

It should be noted that the principles described for PUSCH may also be applied for the sounding reference signals (SRS). I.e., when simultaneous transmission of SRS and PUCCH occurs, the embodiments of the present invention are also applicable if PUSCH or PUCCH is replaced by SRS.

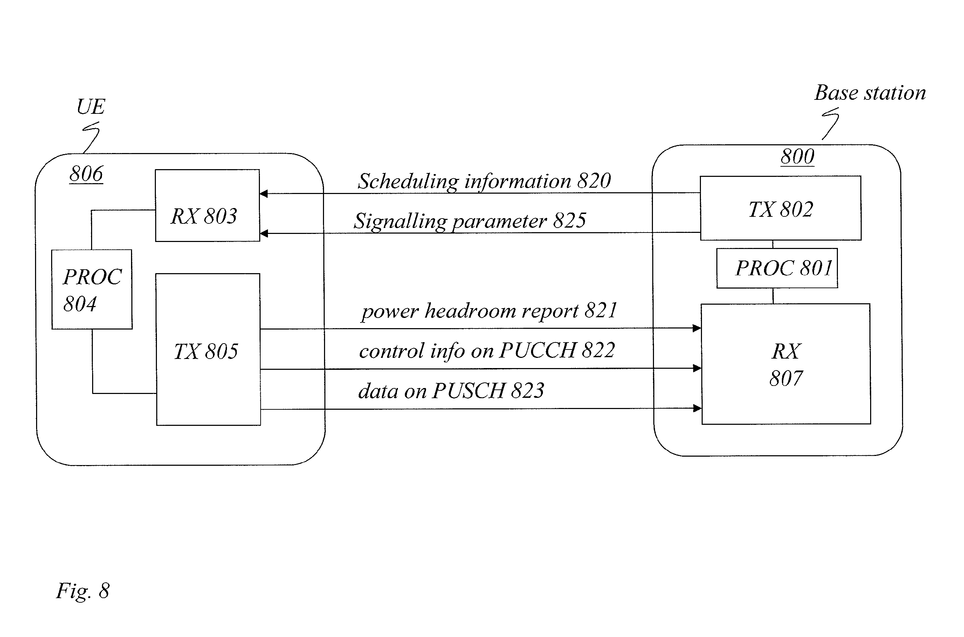

The present invention is also directed to a UE (User Equipment) and a base station, also referred to as an eNB in LTE. The UE is configured to wirelessly communicate with a mobile telecommunication network via base stations. Hence, the UE and the base station comprise antennas, power amplifiers and other software means and electronic circuitry enabling the wireless communication. **Figure 8** illustrates schematically a UE and a base station according to embodiments of the present invention.

Accordingly, the UE 806 is adapted to distribute the available transmit power of a UE between PUCCH and PUSCH. The UE comprises a processor 804 configured to determine available power for transmission on at least the PUCCH and a transmitter 805 configured to transmit to a base station at least one power headroom report 821 indicating the available power for transmission on at least the PUCCH. As indicated in **figure 8,** the transmitter is configured to transmit data on PUSCH and control information on PUCCH. Further, the UE comprises a receiver 803 configured to receive a parameter 825 indicating whether simultaneous transmission of PUSCH and PUCCH is possible and to e.g. receive scheduling information 820. The processor 804 is further configured to configure the uplink transmission based on the received parameter.

Hence, the base station 800 is adapted to distribute the available transmit power of a UE between PUCCH and PUSCH. The base station comprises a receiver 807 for receiving at least one power headroom report 821 indicating the available power for transmission on at least the PUCCH and a processor 801 configured to schedule the UE based on information of the at least one received power headroom report. Furthermore, the base station comprises a transmitter 802 for transmitting scheduling information 820 regarding how to schedule future uplink transmission in the UE, wherein the scheduling information 820 is based on the headroom reports 821.

In addition the processor 801 may be configured to configure the UE whether or not simultaneous transmission of PUCCH and PUSCH is possible, and the transmitter 802 may be configured to signal a parameter 825 to the UE indicating whether simultaneous transmission of PUSCH and PUCCH is possible.

It should be noted that the respective processor 804, 801 of the UE and the base station may be one processor or a plurality of processors configured to perform the different tasks assigned to the respective above mentioned processor of the UE and the base station.

It should also be noted that the available power for transmission in the different embodiment is the available remaining power that can be used for transmission on the relevant physical channel such as PUCCH and PUSCH when the power allocated for the respective channel(s) is reduced from the configured maximum transmit power for the mobile terminal.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1.  A method for a User Equipment, UE, for reporting power headroom, the method **characterised by** comprising:

    - receiving (701) a parameter indicating whether simultaneous transmission of a Physical Uplink Shared Channel, PUSCH and Physical Uplink Control Channel, PUCCH, is possible;
    - configuring (702) the uplink transmission based on the received parameter;
    - determining (703) power headroom for transmission on at least a Physical Uplink Control Channel, PUCCH, and
    - transmitting (704) to a base station at least one power headroom report indicating the power headroom for transmission on at least the PUCCH.

2.  The method according to claim 1, wherein the power headroom is determined for transmission on the PUCCH and a Physical Uplink Shared Channel, PUSCH and the at least one power headroom report indicates the power headroom for transmission on the PUCCH and the PUSCH.

3.  The method according to claim 2, wherein the at least one power headroom report indicating the power headroom for transmission on the PUCCH and the PUSCH is transmitted in combination with a power headroom report indicating the power headroom for transmission on PUSCH or PUCCH.

4.  The method according to claim 1, wherein the power headroom is determined for transmission on the PUCCH and the at least one power headroom report indicates the power headroom for transmission on the PUCCH.

5.  A method for a base station for scheduling a User Equipment, UE, the method **characterised by** comprising:

    - configuring (601) the UE whether or not simultaneous transmission of a Physical Uplink Control Channel (PUCCH) and Physical Uplink Shared Channel (PUSCH) is possible;
    - signalling (602) a parameter to the UE indicating whether simultaneous transmission of the PUSCH and the PUCCH is possible
    - receiving (603) from the UE at least one power headroom report indicating power headroom for transmission on at least a Physical Uplink Control Channel, PUCCH, and
    - scheduling (604) the UE based on information of the at least one received power headroom report.

6. The method according to claim 5, wherein the at least one power headroom report indicates the power headroom for transmission on the PUCCH and a Physical Uplink Shared Channel, PUSCH.

7. The method according to claim 5, wherein the at least one power headroom report indicating the power headroom for transmission on the PUCCH and the PUSCH is received in combination with a power headroom report indicating the power headroom for transmission on PUSCH or PUCCH.

8. The method according to claim 5, wherein the at least one power headroom report indicates the power headroom for transmission on the PUCCH.

9. A User Equipment, UE, (806) for reporting power headroom **characterised by** comprising
a processor (804) configured to determine power headroom for transmission on at least a Physical Uplink Control Channel, PUCCH; and
a transmitter (805) configured to transmit to a base station at least one power headroom report indicating the power headroom for transmission on at least the PUCCH, and
wherein a receiver (803) is configured to receive a parameter indicating whether simultaneous transmission of PUSCH and PUCCH is possible and wherein the processor (804) is further configured to configure the uplink transmission based on the received parameter.

10. The UE according to claim 9, wherein the power headroom is determined for transmission on the PUCCH and a Physical Uplink Shared Channel, PUSCH and the at least one power headroom report indicates the power headroom for transmission on the PUCCH and the PUSCH.

11. The UE according to claim 9 wherein the at least one power headroom report indicating the power headroom for transmission on the PUCCH and the PUSCH is transmitted in combination with a power headroom report indicating the power headroom for transmission on PUSCH or PUCCH.

12. The UE according to claim 9, wherein the power headroom is determined for transmission on the PUCCH and the at least one power headroom report indicates the power headroom for transmission on the PUCCH.

13. A base station (800) for scheduling a User Equipment, UE, **characterised by** comprising a receiver (807) configured to receive from the UE at least one power headroom report indicating the power headroom for transmission on at least a Physical Uplink Control Channel, PUCCH, and a transmitter configured to signal (802) a parameter to the UE indicating whether simultaneous transmission of a Physical Uplink Shared Channel, PUSCH, and the PUCCH is possible and a processor (801) configured to schedule the UE based on information of the at least one received power headroom report and wherein the processor is further configured to configure (601) the UE whether or not simultaneous transmission of the PUCCH and the PUSCH is possible.

14. The base station according to claim 13, wherein the at least one power headroom report indicates the power headroom for transmission on the PUCCH and a Physical Uplink Shared Channel, PUSCH.

15. The base station according to claim 13, wherein the at least one power headroom report indicating the power headroom for transmission on the PUCCH and the PUSCH is received in combination with a power headroom report indicating the power headroom for transmission on PUSCH or PUCCH.

16. The base station according to claim 13, wherein the at least one power headroom report indicates the power headroom for transmission on the PUCCH.

**Patentansprüche**

1. Verfahren für eine Benutzereinrichtung, UE, zum Melden von Leistungsreserve, wobei das Verfahren **dadurch gekennzeichnet ist, dass** es umfasst:

   - Empfangen (701) eines Parameters, der angibt, ob gleichzeitige Übertragung eines gemeinsamen physikalischen Uplink-Kanals, PUSCHs, und eines physikalischen Uplink-Steuerkanals, PUCCHs, möglich ist;
   - Konfigurieren (702) der Uplink-Übertragung basierend auf dem empfangenen Parameter;
   - Bestimmen (703) von Leistungsreserve zur Übertragung auf mindestens einem physikalischen Uplink-Steuerkanal, PUCCH, und

- Senden (704) an eine Basisstation mindestens einer Leistungsreservemeldung, welche die Leistungsreserve zur Übertragung auf mindestens dem PUCCH angibt.

**2.** Verfahren nach Anspruch 1, wobei die Leistungsreserve zur Übertragung auf dem PUCCH und einem gemeinsamen physikalischen Uplink-Kanal, PUSCH, bestimmt wird, und die mindestens eine Leistungsreservemeldung die Leistungsreserve zur Übertragung auf dem PUCCH und dem PUSCH angibt.

**3.** Verfahren nach Anspruch 2, wobei die mindestens eine Leistungsreservemeldung, welche die Leistungsreserve zur Übertragung auf dem PUCCH und dem PUSCH angibt, in Kombination mit einer Leistungsreservemeldung gesendet wird, welche die Leistungsreserve zur Übertragung auf PUSCH oder PUCCH angibt.

**4.** Verfahren nach Anspruch 1, wobei die Leistungsreserve zur Übertragung auf dem PUCCH bestimmt wird, und die mindestens eine Leistungsreservemeldung die Leistungsreserve zur Übertragung auf dem PUCCH angibt.

**5.** Verfahren für eine Basisstation zum Disponieren einer Benutzereinrichtung, UE, wobei das Verfahren **dadurch gekennzeichnet ist, dass** es umfasst:

- Konfigurieren (601) der UE, ob gleichzeitige Übertragung eines physikalischen Uplink-Steuerkanals (PUCCHs) und eines gemeinsamen physikalischen Uplink-Kanals, (PUSCHs), möglich ist oder nicht;
- Signalisieren (602) eines Parameters an die UE, der angibt, ob gleichzeitige Übertragung des PUSCHs und des PUCCHs möglich ist;
- Empfangen (603) von der UE mindestens einer Leistungsreservemeldung, welche die Leistungsreserve zur Übertragung auf mindestens einem physikalischen Uplink-Steuerkanal, PUCCH, angibt, und
- Disponieren (604) der UE basierend auf den Informationen der mindestens einen empfangenen Leistungsreservemeldung.

**6.** Verfahren nach Anspruch 5, wobei die mindestens eine Leistungsreservemeldung die Leistungsreserve zur Übertragung auf dem PUCCH und einem gemeinsamen physikalischen Uplink-Kanal, PUSCH, angibt.

**7.** Verfahren nach Anspruch 5, wobei die mindestens eine Leistungsreservemeldung, welche die Leistungsreserve zur Übertragung auf dem PUCCH und dem PUSCH angibt, in Kombination mit einer Leistungsreservemeldung empfangen wird, welche die Leistungsreserve zur Übertragung auf PUSCH oder PUCCH angibt.

**8.** Verfahren nach Anspruch 5, wobei die mindestens eine Leistungsreservemeldung die Leistungsreserve zur Übertragung auf dem PUCCH angibt.

**9.** Benutzereinrichtung, UE, (806) zum Melden von Leistungsreserve, **dadurch gekennzeichnet, dass** sie umfasst:

einen Prozessor (804), der so konfiguriert ist, dass er Leistungsreserve zur Übertragung auf mindestens einem physikalischen Uplink-Steuerkanal, PUCCH, bestimmt; und
einen Sender (805), der so konfiguriert ist, dass er an eine Basisstation mindestens eine Leistungsreservemeldung sendet, welche die Leistungsreserve zur Übertragung auf mindestens dem PUCCH angibt, und
wobei ein Empfänger (803) so konfiguriert ist, dass er einen Parameter empfängt, welcher angibt, ob gleichzeitige Übertragung von PUSCH und PUCCH möglich ist, und wobei der Prozessor (804) ferner so ausgelegt ist, dass er die Uplink-Übertragung basierend auf dem empfangenen Parameter konfiguriert.

**10.** UE nach Anspruch 9, wobei die Leistungsreserve zur Übertragung auf dem PUCCH und einem gemeinsamen physikalischen Uplink-Kanal, PUSCH, bestimmt wird, und die mindestens eine Leistungsreservemeldung die Leistungsreserve zur Übertragung auf dem PUCCH und dem PUSCH angibt.

**11.** UE nach Anspruch 9, wobei die mindestens eine Leistungsreservemeldung, welche die Leistungsreserve zur Übertragung auf dem PUCCH und dem PUSCH angibt, in Kombination mit einer Leistungsreservemeldung gesendet wird, welche die Leistungsreserve zur Übertragung auf PUSCH oder PUCCH angibt.

**12.** UE nach Anspruch 9, wobei die Leistungsreserve zur Übertragung auf dem PUCCH bestimmt wird, und die mindestens eine Leistungsreservemeldung die Leistungsreserve zur Übertragung auf dem PUCCH angibt.

**13.** Basisstation (800) zum Disponieren einer Benutzereinrichtung, UE, **dadurch gekennzeichnet, dass** sie einen Empfänger (807), der so konfiguriert ist, dass er von der UE mindestens eine Leistungsreservemeldung empfängt, welche die Leistungsreserve zur Übertragung auf mindestens einem physikalischen Uplink-Steuerkanal, PUCCH, angibt, und einen Sender (802), der so konfiguriert ist, dass er einen Parameter an die UE signalisiert, der angibt, ob gleichzeitige Übertragung eines gemeinsamen physikalischen Uplink-Kanals, PUSCHs, und des PUCCHs möglich ist, und einen Prozessor (801) umfasst, der so konfiguriert ist, dass er die UE basierend auf Informationen der mindestens einen empfangenen Leistungsreservemeldung disponiert, und wobei der Prozessor ferner so konfiguriert ist, dass er die UE konfiguriert (601), ob die gleichzeitige Übertragung des PUCCHs und des PUSCHs möglich ist oder nicht.

**14.** Basisstation nach Anspruch 13, wobei die mindestens eine Leistungsreservemeldung die Leistungsreserve zur Übertragung auf dem PUCCH und einem gemeinsamen physikalischen Uplink-Kanal, PUSCH, angibt.

**15.** Basisstation nach Anspruch 13, wobei die mindestens eine Leistungsreservemeldung, welche die Leistungsreserve zur Übertragung auf dem PUCCH und dem PUSCH angibt, in Kombination mit einer Leistungsreservemeldung empfangen wird, welche die Leistungsreserve zur Übertragung auf PUSCH oder PUCCH angibt.

**16.** Basisstation nach Anspruch 13, wobei die mindestens eine Leistungsreservemeldung die Leistungsreserve zur Übertragung auf dem PUCCH angibt.


**Revendications**

**1.** Procédé pour un équipement d'utilisateur, UE, pour rapporter une réserve de puissance, le procédé étant **caractérisé en ce qu'**il comprend les étapes consistant à :

- recevoir (701) un paramètre indiquant si une transmission simultanée d'un canal partagé de liaison montante physique PUSCH et un canal de commande de liaison montante physique PUCCH est possible ;
- configurer (702) la transmission de liaison montante sur la base du paramètre reçu ;
- déterminer (703) une réserve de puissance pour la transmission sur au moins un canal de commande de liaison montante physique PUCCH ; et
- transmettre (704) à une station de base au moins un rapport de réserve de puissance indiquant la réserve de puissance pour la transmission sur au moins le PUCCH.

**2.** Procédé selon la revendication 1, dans lequel la réserve de puissance est déterminée pour la transmission sur le PUCCH et un canal partagé de liaison montante physique PUSCH et au moins un rapport de réserve de puissance indique la réserve de puissance pour une transmission sur le PUCCH et le PUSCH.

**3.** Procédé selon la revendication 2, dans lequel au moins un rapport de réserve de puissance indiquant la réserve de puissance pour une transmission sur le PUCCH et PUSCH est transmis en combinaison avec un rapport de réserve de puissance indiquant la réserve de puissance pour une transmission sur le PUSCH ou PUCCH.

**4.** Procédé selon la revendication 1, dans lequel la réserve de puissance est déterminé pour une transmission sur le PUCCH et au moins un rapport de réserve de puissance indique la réserve de puissance pour une transmission sur le PUCCH.

**5.** Procédé pour une station de base de programmation d'un équipement d'utilisateur UE, le procédé étant **caractérisé en ce qu'**il comprend les étapes consistant à :

- configurer (601) l'UE si ou pas la transmission simultanée d'un canal de commande de liaison montante physique (PUCCH) et d'un canal partagé de liaison montante physique (PUSCH) est possible ;
- signaler (602) un paramètre à l'UE indiquant si une transmission simultanée du PUSCH et du PUCCH est possible ;
- recevoir (603) depuis l'UE au moins un rapport de réserve de puissance indiquant une réserve de puissance pour la transmission sur au moins un canal de commande de liaison montante physique PUCCH, et
- programmer (604) l'UE sur la base des informations d'au moins un rapport de réserve de puissance reçu.

**6.** Procédé selon la revendication 5, dans lequel au moins un rapport de réserve de puissance indique la réserve de puissance pour une transmission sur le PUCCH et un canal partagé de liaison montante physique PUSCH.

7. Procédé selon la revendication 5, dans lequel au moins un rapport de réserve de puissance indiquant la réserve de puissance pour une transmission sur le PUCCH et le PUSCH est reçu en combinaison avec un rapport de réserve de puissance indiquant la réserve de puissance pour une transmission sur PUSCH ou PUCCH.

8. Procédé selon la revendication 5, dans lequel au moins un rapport de réserve de puissance indique la réserve de puissance pour une transmission sur le PUCCH.

9. Équipement d'utilisateur UE (806) pour rapporter une réserve de puissance, **caractérisée en ce qu'**il comprend :

un processeur (804) configuré pour déterminer une réserve de puissance pour une transmission sur au moins un canal de commande de liaison montante physique PUCCH ; et
un émetteur (805) configuré pour transmettre à une station de base au moins un rapport de réserve de puissance indiquant la réserve de puissance pour de transmission sur au moins le PUCCH, et
dans lequel un récepteur (803) est configuré pour recevoir un paramètre indiquant si une transmission simultanée de PUSCH et PUCCH est possible et dans lequel le processeur (804) est en outre configuré pour configurer la transmission de liaison montante sur la base du paramètre reçu.

10. UE selon la revendication 9, dans lequel la réserve de puissance est déterminée pour une transmission sur le PUCCH et un canal partagé de liaison montante physique PUSCH et au moins un rapport de réserve de puissance indique la réserve de puissance pour la transmission sur le PUCCH et PUSCH.

11. UE selon la revendication 9, dans lequel au moins un rapport de réserve de puissance indiquant la réserve de puissance pour une transmission sur le PUCCH et PUSCH est transmis en combinaison avec un rapport de réserve de puissance indiquant la réserve de puissance pour une transmission sur PUSCH ou PUCCH.

12. UE selon la revendication 9, dans lequel la réserve de puissance est déterminée pour une transmission sur le PUCCH et au moins un rapport de réserve de puissance indique la réserve de puissance pour une transmission sur le PUCCH.

13. Station de base (800) pour programmer un équipement d'utilisateur UE, **caractérisée en ce qu'**elle comprend un récepteur (807) configuré pour recevoir depuis l'UE au moins un rapport de réserve de puissance indiquant la réserve de puissance pour une transmission sur au moins un canal de commande de liaison montante physique PUCCH et un émetteur configuré pour signaler (802) un paramètre à l'UE indiquant si une transmission simultanée d'un canal partagé de liaison montante physique PUSCH et du PUCCH est possible et un processeur (801) configuré pour programmer l'UE sur la base d'une information d'au moins un rapport de réserve de puissance reçue et dans lequel le processeur est en outre configuré pour configurer (601) l'UE si ou non une transmission simultanée du PUCCH et du PUSCH est possible.

14. Station de base selon la revendication 13, dans laquelle au moins un rapport de réserve de puissance indique la réserve de puissance pour une transmission sur le PUCCH et un canal partagé de liaison montante physique PUSCH.

15. Station de base selon la revendication 13, dans laquelle au moins un rapport de réserve de puissance indiquant la réserve de puissance pour une transmission sur le PUCCH et le PUSCH est reçu en combinaison avec un rapport de réserve de puissance indiquant la réserve de puissance pour une transmission sur PUSCH ou PUCCH.

16. Station de base selon la revendication 13, dans laquelle au moins un rapport de réserve de puissance indique la réserve de puissance pour une transmission sur le PUCCH.

**One resource element**

Δf = 15 kHz

**One OFDM symbol including cyclic prefix**

Fig. 1

EP 2 484 162 B1

Sub-frame ($T_{subframe}$ = 1 ms)

#0　#1 · · ·　　　　　　　　　　　　　　　#9

Radio frame ($T_{frame}$ = 10 ms)

Fig. 2

One subframe

Reference symbols

Control signaling

Control region

Fig. 3

Fig. 4

User #1    User #2

One slot (0.5 ms)    One sub-frame (1 ms)

Data    Reference signal

Fig. 5

**BS**

Config. UE regarding Simult. tx on PUCCH and PUSCH ⟿ 601

Send signalling parameter about the configuration ⟿ 602

PUCCH& PUSCH
yes

Receive power headroom Reports indicating available Power for transm. on PUCCH ⟿ 603

Schedule the UE based on the Information in the received Power headroom reports ⟿ 604

*Fig. 6*

**UE**

Receive signalling parameter about the configuration ⟿ 701

Configure the UE ⟿ 702

PUCCH& PUSCH
yes

Determine available Power for transm. on PUCCH ⟿ 703

Transmite at least one power headroom Report indicating available Power on PUCCH ⟿ 704

*Fig. 7*

Fig. 8

EP 2 484 162 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Uplink multiple channel transmission under UE transmit power limitation. 3GPP Draft; R1-091206 LTEA_UL TXP LIMITATION, 3RD GENERATION PARTNERSHIP PROJECT (3GPP). MOBILE COMPETENCE CENTRE, 17 March 2009